# EUROPEAN PATENT APPLICATION

(11) **EP 1 806 081 A1**
(43) Date of publication of application: **11.07.2007**
(21) Application number: 07100186.1
(22) Date of filing: 05.01.2007
(51) Int. Cl.: A47J 43/14

(54) **Egg container, as well as method for manufacturing the egg container**

(30) Priority: 06.01.2006 NL 1030857
(71) Applicant: Cuyten Beheer B.V., 5591 MN Heeze (NL)
(72) Inventor: Cuyten, Antonius Petrus Johannes Maria, 5591 MN, Heeze (NL)
(74) Representative: Verhees, Godefridus Josephus Maria

(57) **Abstract**

In a method for the manufacture of an egg holder, a metal strip 1 is brought above a matrix 9 provided with notches 5 and 7. A stamp 13, the contact surface of which that comes into contact with the strip 1 is formed by a rubber layer 15, is pressed against the strip 1 present above the notch. The strip then alters shape and is pressed into the notch 7 so that a cup 11 forms in the strip. After the formation of the cups in the strip, slots are milled in the bottom of the cups 3, 11 along their widths.

## Description

### BACKGROUND OF THE INVENTION:

### Field of the invention

The invention relates to an egg holder provided with an open metal cup on the top.

### Prior art

A device provided with such an egg holder is known from US 2.521.907. The bottom part of this well-known egg holder can be lifted up so that an opening forms through which the egg white can run out. This egg holder is not suitable for holding an egg in an egg-breaking machine, in which a crack is made with a knife from underneath in order to break it. These egg-breaking machines are therefore equipped with holding devices to hold an egg securely by two opposite ends, so that there is a space between these ends for a knife to make a crack in the egg.

### Summary of the invention

An objective of the invention is to provide an egg holder which can be used with advantage in egg-breaking machines of the sort described above. For this purpose the egg holder according to the invention is characterised in that the cup is elongated, so that there is an elongated opening in the bottom of the cup that extends along the width of the cup. The egg holder according to the invention is suitable for use in egg-breaking machines in which a crack is made in an egg from underneath with a knife. If an egg holder according to the invention is used in an egg-breaking machine, this machine does not need devices for holding the eggs, so that they can be made more simply.

Preferably the elongated opening is in or near the middle, seen in the lengthwise direction of the cup.

The invention also relates to a method for the manufacture of an egg holder, in which a metal strip can be brought above a matrix provided with a notch, after which a stamp, the contact surface of which that comes into contact with the strip is formed by a rubber layer, presses a part of the strip, which is present above the notch, into the notch so that the strip alters shape and forms a cup in the strip.

A method for altering the shape of a metal strip in a way described above is known from DE 197 51 316 A. It is possible to use this method to manufacture egg holders with cup-shaped containers in which eggs can be placed. Regarding the method, the invention is characterised in that a slot is made in the bottom of the strip formed into a cup along the width of the cup. Preferably the slot is made by milling.

In order to get the egg holders formed in a strip at a fixed distance apart, a variation of the method according to the invention is characterised in that the matrix is provided with a second notch at a distance from the above first notch, whereby the strip, after a first cup is formed, is pushed lengthwise until the formed cup is in the second notch, after which a further cup is formed in the strip at the place of the first notch.

### Brief description of the drawings

The invention will be elucidated more fully below on the basis of drawings in which embodiments of the method and the egg holder according to the invention are shown. In these drawings:
Figure 1 shows a device for forming an egg holder during a first step in the method according to the invention in lengthwise cross-section;
Figure 2 shows the device in figure 1 in transverse cross-section;
Figure 3 shows the device during a second step in the method;
Figure 4 shows the situation in figure 3 in transverse cross-section;
Figure 5 shows an egg holder manufactured according to the method in side elevation; and
Figure 6 shows the egg holder in transverse cross-section.

### Detailed description of the drawings

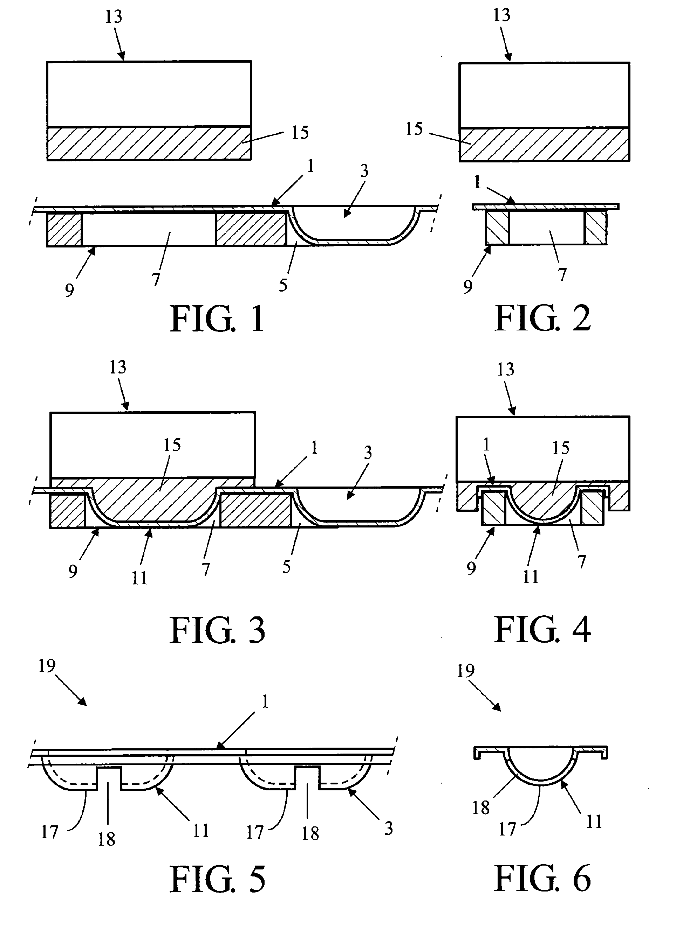

Figures 1-4 show various steps during the manufacture of an egg holder according to a variation of the method according to the invention. Figures 1 and 3 show a device during operation in lengthwise cross-section and figures 2 and 4 show this device in transverse cross-section. During the step shown in figures 1 and 2 a metal strip 1 in which a first cup 3 is already formed is brought above a matrix 9 provided with notches 5 and 7. In this way the already formed cup 3 is positioned in the notch 5 and a following cup is pressed into the other notch 7.

Figures 3 and 4 show the formation of a further cup 11. This is done with rubber presses in which a stamp 13, the contact surface of which that comes into contact with the strip 1 is formed by a rubber layer 15, is pressed against the strip 1 that is present above the notch. The strip alters shape and is pressed into the notch 7 so that a further cup 11 forms in the strip.

After formation of the cups in the strip, slots 18 are cut into the bottom 17 of the cups 3, 11 along their widths. Figures 5 and 6 show an egg holder 19 made in this way in side elevation and transverse cross-section respectively.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Egg holder provided with an open metal cup on the top, **characterised in that** the cup is elongated so that there is an elongated opening in the bottom of the cup, which extends along the width of the cup.

2. Egg holder according to claim 1, **characterised in that** the elongated opening, seen in the lengthwise direction of the cup, is in or near the middle.

3. Method for the manufacture of an egg holder according to claim 1 or 2, in which a metal strip is brought above a matrix provided with a notch, after which a stamp, the contact surface of which that comes into contact with the strip is formed by a rubber layer, presses a part of the strip, which is present above the notch, into the notch so that the strip alters shape and forms a cup in the strip, **characterised in that** a slot is made in the bottom of the strip formed into a cup along the width of the cup.

4. Method according to claim 1, **characterised in that** the slot is made by milling.

5. Method according to claim 3 or 4, **characterised in that** the matrix is provided with a second notch at a distance from the above first notch, so that the strip, after a first cup is formed, is pushed lengthwise until the formed cup is pushed into the second notch, after which a further cup is formed in the strip at the place of the first notch.
